# EUROPÄISCHE PATENTSCHRIFT

(11) **EP 0 896 830 B1**
(45) Veröffentlichungstag und Bekanntmachung des Hinweises auf die Patenterteilung: **15.03.2006**
(21) Anmeldenummer: 98250276.7
(22) Anmeldetag: 30.07.1998
(51) Int. Cl.: A62D 3/00, B09C 1/02, B09C 1/10

(54) **Verfahren zur kontinuierlichen Dekontamination von schadstoffbelastetem Bauschutt**
Method for the continuous decontamination of polluted building rubble
Procédé pour la décontamination continue de gravats pollués

(30) Priorität: 11.08.1997 DE 19735573
(43) Veröffentlichungstag der Anmeldung: 17.02.1999
(73) Patentinhaber: UFZ-UMWELTFORSCHUNGSZENTRUM Leipzig-Halle GmbH, 04318 Leipzig (DE)
(72) Erfinder: Müller, Roland H. Dr., 04347 Leipzig (DE); Babel, Wolfgang Prof. Dr., 04347 Leipzig (DE); Müller, Roland A. Dr., 04439 Engelsdorf (DE); Wasserthal, Katy, 04328 Leipzig (DE)
(74) Vertreter: Ziebig, Marlene

(56) Entgegenhaltungen:
- EP-A- 0 509 474
- WO-A-94/10095
- DE-A- 4 305 820

## Beschreibung

Die Erfindung betrifft ein effizientes Verfahren zur biologischen Dekontamination von schadstoffbelastetem Bauschutt sowie eine Vorrichtung zur Durchführung dieses Verfahrens.

Zivilisierung und Industrialisierung haben zu erheblichen Belastungen der Umwelt geführt, deren Beseitigung oftmals Probleme aufwirft. Ein "geschütztes Lagern" schadstoffbelasteter Materialien kann nicht die Alternative sein, da damit die Probleme späteren Generationen hinterlassen werden. Schwerpunkt von Kontaminationen sind häufig alte Industrieanlagen, insbesondere auch der chemischen Industrie. Bei deren Rückbau fallen stark kontaminierte Materialien an, die auch das Mauerwerk der Gebäude und Anlagen selbst einschließen. Die Mengen an Bauschutt, die aus dem Abbruch von Industrieanlagen oder dem Umstrukturieren ganzer Standorte anfallen, sind oft erheblich.

Die Dekontamination von festen Matrizes ist heute für viele Bereiche schon Stand der Technik, insbesondere für kontaminierte Böden. Die Sanierungsverfahren reichen von physikalisch-chemischen Methoden, z. B. Extraktion oder Verbrennung, bis zu mikrobiologischen Dekontaminationen. Letztere werden in Abhängigkeit vom Kontaminationsgrad oft favorisiert, weil sie kostengünstig und umweltfreundlich sind. Hierzu sind verschiedene Techniken ausgearbeitet worden. Praktiziert werden, abhängig von der Spezifik der Kontamination, *in situ*- oder *ex situ-*Verfahren. Eine Übersicht über den Stand der Technik vermittelt "Contaminated Soil '95" (W. J. van den Brink, R. Bosman, F. Arndt, eds; Kluwer Academic Publishers, Dordrecht, Boston, London 1995).

Bauschutt hat im Zusammenhang mit der Bodensanierung bereits eine Rolle gespielt, allerdings derart, daß dieser z. B. zur Auflockerung der oft feinkörnigen und schluffigen Böden dient und über solcher Art Oberflächenvergrößerung ein besserer Stoffaustausch und eine bessere Belüftung der meist aerob ausgelegten Dekontaminationsverfahren erreicht wurde. Nachteile ergaben sich hierbei insofern, als die Komponenten nach erfolgter Sanierung wieder abzutrennen sind, um eine zweckmäßige weiterverwendung zu ermöglichen.

Bauschutt als zu dekontaminierende Matrix hat im vergleich zu Böden bislang eine untergeordnete Rolle gespielt. Bislang publizierte mikrobiologische Verfahren behandeln Bauschutt als Sonderfall mit überschaubarer Dimension. Dementsprechend sind die Verfahren ausgelegt; sie werden in aller Regel diskontinuierlich betrieben. Dazu werden geeignete, meist geschlossene und nach verschiedenen Gesichtspunkten konstruierte Reaktoren eingesetzt und die Behandlung des Materials in diesen Systemen bis zum Erreichen eines entsprechenden Sanierungsziels durchgeführt. Derartige Verfahren sind z. B. in den Patenten DE 42 29 926, DE 42 33 458 oder EP 0 379 121 ausgeführt. Eine solche Verfahrensweise beschreibt auch Patent WO 94/10095. Alle Verfahren nutzen üblicherweise Mikroorganismen, entweder die autochthonen, die aktiviert werden, oder ex situ vermehrte Spezialisten, mit denen das zu dekontaminierende Material beimpft wird. Nach der Dekontamination muß das gereinigte Material in aller Regel durch Spülen mit Wasser von der Biomasse befreit werden. Die gesamte Verfahrensweise ist zeitaufwendig und nur für kleine Dimensionen geeignet. Bei der Demontage von Industrieanlagen fallen aber Bauschuttmengen an, die ein sehr großes Volumen ausmachen und z. B. durchaus 50.000 m³ umfassen können.

Aufgabe der Erfindung war es deshalb, ein mikrobielles Sanierungsverfahren zu entwickeln, mit dem derartige Volumina von festen, mit organischen Schadstoffen belasteten Materialien effektiv saniert werden können, das heißt mit vertretbarem Zeitaufwand und mit möglichst geringem ökonomischen Aufwand. Insbesondere soll das Verfahren zur Dekontamination von großen Bauschuttmengen geeignet sein, die beispielsweise mit synthetischen organischen Substanzen, Mineralölkohlenwasserstoffen aller Verarbeitungsstufen oder aromatischen Kohlenwasserstoffen belastet sind.

Erfindungsgemäß wird die Aufgabe so gelöst, daß zwei Reaktoren, ein Detoxifikationsreaktor 1 und ein Dekontaminationsreaktor 2, über Waschwasser kontinuierlich verbunden sind. In einer besonders bevorzugten Ausführungsform ist der Dekontaminationsreaktor 2 eine Halde der zur dekontaminierenden Materialien, insbesondere eine Bauschutthalde. Im Dekontaminationsreaktor 2 werden aus den schadstoffbelasteten Materialien durch den Eintrag von Wasser die wasserlöslichen Schadstoffe eluiert, und im Detoxifikationsreaktor 1 erfolgt der hauptsächliche mikrobielle Abbau der Schadstoffe.

Der Detoxifikationsreaktor 1, der als Festbett ausgelegt ist, wird mit Mikroorganismen als Reinkultur, definierten Konsortien oder nichtdefinierten Konsortien, die aus der *ex situ*-Vermehrung von autochthonen Mikroorganismen aus dem zu dekontaminierenden Material erhalten wurden, beimpft. Als Festbett dient ein Teil der zu dekontaminierenden Matrix, erfindungsgemäß bevorzugt der Bauschutt, der auf geeignete Korngrößen, üblicherweise bis zu 70 mm und günstigerweise bis zu Korngrößen von 30 mm gebrochen wurde. Die Ansiedlung der Mikroorganismen auf der festen Matrix nach Beimpfung kann durch Rückhaltung der Biomasse durch geeignete Materialien, die der Adhäsion der Mikroorganismen oder ihrer Konzentrierung dienen, unterstützt werden. Der Detoxifikationsreaktor 1 wird in geeigneter Weise belüftet, so daß im gesamten interpartikulären Volumen aerobe Verhältnisse herrschen.

In diesen Festbettreaktor 1 wird das wäßrige Eluat über die Zuführung 3 geleitet, welches aus der Behandlung im Dekontaminationsreaktor 2, vorzugsweise der Bauschutthalde, stammt, wobei die festen Materialien so aufgeschichtet werden sollten, daß durch Flüssigkeitsbehandlung eine gleichmäßige Durchdringung und Elution des Materials gewährleistet wird. Das Eluat wird gleichmäßig, z. B. durch Berieseln mittels- Sprüh- oder Sprenkleranlagen auf das Festbett aufgetragen. Das wäßrige Medium kann mit Komponenten, die zum Wachstum von Mikroorganismen erforderlich sind, angereichert sein.

Im Detoxifikationsreaktor 1 findet der hauptsächliche Abbau der Schadstoffe statt, insbesondere in der initialen Phase der Behandlung, wenn das Eluat eine hohe Schadstofffracht trägt. Vorteilhaft ist bei dieser Verfahrensweise auch, daß der Eluatstrom in dieser initialen Phase so dimensioniert werden kann, daß die Belastung mit organischer Fracht dem Abbaupotential der Biomasse angepaßt werden kann und so eine Beeinträchtigung der mikrobiellen Aktivität durch die oft toxischen Verbindungen und Gemische von Verbindungen umgangen bzw. eingeschränkt werden kann. Die Schadstoffe in der Flüssigphase, wenn sie produktiv dekontaminiert werden, helfen die Aktivität zu erhalten und, indem sich die Mikroorganismen vermehren, die biokatalytische Aktivität zu erhöhen.

Erfindungsgemäß wird das Eluat nach Passage des Detoxifikationsreaktors 1 gesammelt und wieder in den Dekontaminationsreaktor 2 über die Wasserabführung 4 zurückgeführt. Damit verbunden ist gleichzeitig ein Austrag von aufgebrachten bzw. im Detoxifikationsreaktor 1 vermehrten Mikroorganismen, was auch zu einer gewollten Beimpfung des Materials im Reaktor 2, insbesondere der Bauschutthalde, führt, so daß zunehmend die Dekontamination durch Elution auch durch *in situ-*Detoxifikation unterstützt wird. Damit verbunden ist eine Effektivitätssteigerung des gesamten Abbauprozesses.

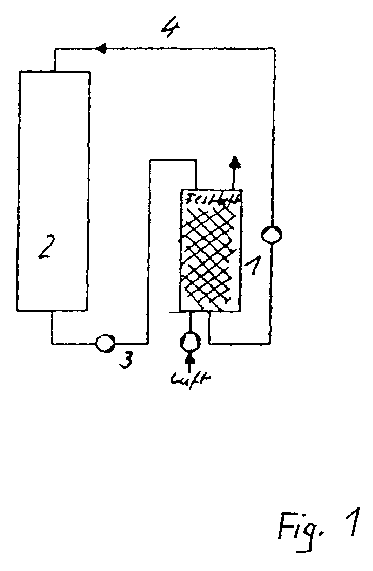

Ein Vorteil der Erfindung besteht zum Beispiel darin, daß die Bauschutthalde als Biomiete nicht besonders behandelt werden muß, sie erhält biodegradative Kapazität in dem Maße, wie im Detoxifikationsreaktor 1 infolge Abbau die Zelldichte zunimmt. Da insbesondere in einer späteren Phase der Dekontamination die Substratmengen kleiner werden und z. B. der in der Flüssigkeit gelöste Sauerstoff das Ausmaß des Abbaus immer weniger beeinflußt, ist dies für den Gesamtprozess nicht von Nachteil. Der Prozess in der Bauschutthalde oder generell in der Halde der festen Materialien kann allerdings durch Eintrag von Sauerstoff forciert werden, wenn sich dies aus gesamtökonomischen Betrachtungen als Vorteil erweist. Das Haldenmaterial muß nach der mikrobiellen Sanierung nicht weiter behandelt werden, da im Verlauf der Abreicherung der organischen Komponenten, und damit dem Entzug einer verwertbaren Kohlenstoff- und Energiequelle, die Bakterien lysieren und keine Belastung bei der weiteren Verwendung des Materials darstellen.
Die Erfindung betrifft auch eine Vorrichtung zur Durchführung des erfindungsgemäßen Verfahrens, die schematisch in Figur 1 dargestellt ist.

### Ausführungsbeispiele

### Beispiel 1:

### Dekontamination von Bauschutt, der organische Schadstoffe aus der Herbizidproduktion beinhaltete

Die erfindungsgemäße Verfahrensweise wurde im Technikumsmaßstab erprobt und wird am Beispiel der Dekontamination von mit chlorierten/methylierten Phenolen und Phenoxyalkansäuren belastetem Bauschutt näher beschrieben. Das Material stammt aus dem Abriß einer ehemaligen Anlage zur Produktion von Herbiziden. Das Material wurde auf Korngrößen ≤ 70 mm geschreddert und umfaßte ein Spektrum bis hinab zum Feinstkorn. Dieser Bauschutt wurde ungesiebt eingesetzt. Er diente gleichzeitig als Matrix für den Festbettreaktor 1. Dazu wurde eine geeignete Vorrichtung, welche im unteren Bereich die Möglichkeit zum Eintrag von Luft hatte sowie die Möglichkeit, anfallende Flüssigkeit nach Passage durch den Reaktor zu sammeln und über Pumpen weiter zu transportieren, zu ca. 40 1 mit diesem Material gefüllt. Der Reaktor war an eine Bauschutthalde 2 von ca. 300 kg gekoppelt, die so aufgeschichtet war, daß eine gleichmäßige Druchfeuchtung und Elution des Materials gewährleistet war.

Das System wurde mit ca. 30 l Leitungswasser beschickt, und damit die Bauschutthalde mit einer Rate von 5 1/h berieselt. Das Perkolat wurde gesammelt und auf den Festbettreaktor 1 zurückgeführt. Dieser war mit bakterieller Biomasse beimpft, die Aktivitäten zum Abbau der chlorierten Phenole und Phenoxyalkansäuren aufwies. Es wurden Konzentrationen von 10 mg Bakterientrockenmasse pro kg Bauschutt bis zu 200 mg Bakterientrockenmasse pro kg Bauschutt aufgebracht. Die dafür eingesetzten Bakterien, die die hohen pH-Werte aus wäßrigen Eluaten von Bauschutt tolerieren, waren aus diesem Material angereichert und ihre metabolischen Leistungen betreffs des Abbaus der zu dekontaminierenden Verbindungen ermittelt worden. Sie wurden entsprechend ihres Leistungsprofils und des Kontaminationsspektrums als Einzelkulturen oder definierte Konsortien eingesetzt. Der Festbettreaktor war zur Unterstützung der Ansiedlung der Bakterien mit einer Lage Glaswolle abgedeckt. Begast wurde mit Luft.

Die Behandlung des Bauschuttes auf diese Art und Weise führte innerhalb von wenigen Tagen zu einer Abreicherung der Kontaminanten nach Passage des Eluats durch den Festbettreaktor auf nicht mehr nachweisbare Konzentrationen. Das Eluat aus der Bauschutthalde 2 wies ebenfalls eine Abnahme der Konzentration der einzelnen Verbindungen auf, die erwartungsgemäß zeitlich verzögert war.

Der Konzentrationsverlauf der chlorierten Organika wurde anhand des AOX-Wertes verfolgt. Dieser zeigte im Verlauf der Behandlung eine stetige Abnahme und erreichte innerhalb von 40 Behandlungstagen von anfänglich 5-10 mg/kg Werte unter 1 mg/kg Bauschutt. Entsprechend des angestrebten Sanierungsziels von 1 mg/kg Bauschutt (Trockenmasse) wurde die Behandlung hier abgebrochen.

### Bezugszeichenliste

- 1: Detoxifikationsreaktor mit Festbett
- 2: Dekontaminationsreaktor
- 3: Elutionswasserzuführung
- 4: Wasserabführung

## Patentansprüche

1. Verfahren zur kontinuierlichen Dekontamination von schadstoffbelastetem Bauschutt,
**dadurch gekennzeichnet,**
**daß** in einem Dekontaminationsreaktor (2) aus dem schadstoffbelasteten Bauschutt durch den Eintrag von Wasser die Schadstoffe eluiert werden, das Elutionswasser auf das Festbett eines Detoxifikationsreaktors (1), in dem der mikrobielle Abbau der Schadstoffe stattfindet, geleitet wird, anschließend wiederum in den Dekontaminationsreaktor (2) zurückgeführt und erneut zur Elution der Schadstoffe eingesetzt wird, wobei als Festbett des Detoxifikationsreaktors (1) ein Teil des zu dekontaminierenden Bauschuttes eingesetzt wird, der mit Biomasse von autochthonen Mikroorganismen aus dem zu dekontaminierenden Bauschutt beimpft ist.

2. Verfahren nach Anspruch 1,
**dadurch gekennzeichnet,**
**daß** als Dekontaminationsreaktor (2) eine Bauschutthalde dient.

3. Vorrichtung zur Durchführung des Verfahrens nach Anspruch 1 oder 2, bestehend aus einem als Festbettreaktor ausgestalteten Detoxifikationsreaktor (1), der über eine Elutionswasserzuführung (3) und eine Wasserabführung (4) mit einem Dekontaminationsreaktor (2) verbunden ist.

## Claims

1. A method for the continuous decontamination of polluted building-rubble,
**characterized in that**
the pollutants are eluted from the polluted building-rubble in a decontamination reactor (2) by addition of water, the eluted water is passed over the fixed bed of a detoxification reactor (1), in which microbial degradation of the pollutants takes place, and subsequently re-fed into the decontamination reactor (2) and reused to elute the pollutants, part of the building-rubble to be decontaminated being used as fixed bed of the detoxification reactor (1), which part is seeded with biomass of autochthonous microorganisms from the building-rubble to be decontaminated.

2. The method according to claim 1,
**characterized in that**
a pile of building-rubble is used as decontamination reactor (2).

3. An apparatus for implementing the method according to claim 1 or 2, said apparatus consisting of a detoxification reactor (1) configured as a fixed-bed reactor, said detoxification reactor being connected with a decontamination reactor (2) via an elution water inlet (3) and a water outlet (4).

## Revendications

1. Procédé de décontamination continue de gravats pollués,
**caractérisé en ce que**,
dans un réacteur de décontamination (2), on élue les substances polluantes à partir des gravats pollués par l'admission d'eau, on conduit l'eau d'élution sur le lit fixe d'un réacteur de détoxification (1), dans lequel la dégradation microbienne des substances polluantes a lieu, on la ramène ensuite de nouveau dans le réacteur de décontamination (2), et on l'utilise de nouveau pour éluer les substances polluantes, moyennant quoi on utilise, en tant que lit fixe du réacteur de détoxification (1), une partie des gravats à décontaminer qui est inoculée avec la biomasse des micro-organismes autochtones issue des gravats à décontaminer.

2. Procédé selon la revendication 1,
**caractérisé en ce**
**qu'**en tant que réacteur de décontamination (2), on utilise un dépôt de gravats.

3. Dispositif d'exécution du procédé selon la revendication 1 ou 2, consistant en un réacteur de détoxification (1) agencé en tant que réacteur à lit fixe, qui est relié, par l'intermédiaire d'une alimentation d'eau d'élution (3) et d'une évacuation d'eau (4), à un réacteur de décontamination (2).
